# EUROPEAN PATENT APPLICATION

(11) **EP 4 797 121 A1**
(43) Date of publication of application: **26.08.2026**
(21) Application number: 25203722.1
(22) Date of filing: 22.09.2025
(51) Int. Cl.: G06F 16/35

(54) **METHOD AND SYSTEM FOR FILTERING CONTEXTUALLY RELEVANT CONTENT FROM LARGE-SCALE TEXTUAL DATASETS**

(30) Priority: 19.02.2025 IN 202521014270
(71) Applicant: Tata Consultancy Services Limited, Maharashtra (IN)
(72) Inventor: JAIN, Anubhav, 110001 New Delhi, Delhi (IN); DUBEY, Ashesh, 400096 Mumbai, Maharashtra (IN); KALELE, Amit, 411057 Pune, Maharashtra (IN)
(74) Representative: Goddar, Heinz J.

(57) **Abstract**

This disclosure relates generally to screening large data-sets with multi-level clustering. The State-of-the-art methods leveraging LLMs with generative capabilities focus on scanning an extraneous and peripheral contents in text documents to retrieve contextually relevant information. This leads to hallucinations and uncertainty in response and results in complicating the generation of actionable insights. The method of the present disclosure performs a two-level clustering at both an intra-document and an inter-document levels to extract context relevant data. The method screens semantically similar sentence chunks at intra-document level to create a concise intra-document embeddings with contextually relevant text data. Further, an inter-document level clustering is performed by computing a cluster integrity and relevancy (CLIAR) index on a plurality of intra-document embeddings to isolate inter-document cluster having semantic representation of contextually relevant contents.

## Description

### CROSS-REFERENCE TO RELATED APPLICATIONS AND PRIORITY

The present application claims priority from Indian application no. 202521014270, filed on February 19, 2025.

### TECHNICAL FIELD

The disclosure herein generally relates to filtering large-scale datasets, and, more particularly, to a method and system for filtering large-scale datasets using multi-level clustering approach.

### BACKGROUND

Enterprises face significant challenges in processing and extracting meaningful insights from vast collections of documents with textual data, both from web and internal repositories. This complexity makes it difficult to capitalize on valuable insights buried in their data and hinders the ability to evaluate content relevancy effectively. Thus, posing a barrier to adopting generative AI based solutions for informed decision-making, automation, and other applications. Current technologies leveraging large language models (LLMs) with generative artificial intelligence (GenAI) capabilities focus on scanning textual data to retrieve contextually relevant information, but they encounter significant challenges both within and across documents. Models often struggle to extract core information by filtering out extraneous or peripheral content, such as organizational references, credits, or tangential details in news articles or the multi-faceted subtopics in blogs. This lack of precision introduces hallucinations and uncertainty, complicating the generation of actionable insights. Existing solutions often fall short in identifying and isolating strong similarities across multiple documents with similar content. The absence of a robust metric to determine certainty in textual datasets makes it difficult to filter out less relevant documents while retaining high-quality, meaningful content. These limitations hinder the ability of enterprises to utilize GenAI solutions for reliable content processing, comparison, and thematic insight generation.

### SUMMARY

Embodiments of the present disclosure present technological improvements as solutions to one or more of the above-mentioned technical problems recognized by the inventors in conventional systems. For example, in one embodiment, a method for filtering contextually relevant content from large-scale textual datasets is provided. The method includes receiving, via one or more hardware processors, (i) one or more text documents, and (ii) one or more embedding models. The method further includes obtaining, via the one or more hardware processors, a plurality of chunk embeddings with semantic information for each text document from the one or more text documents. The size of each text document from the one or more text documents is first validated based on a pre-defined window size and a pre-defined stride size. The plurality of chunk embeddings with semantic information are obtained from the one or more embedding models using a sliding window technique. The method further includes performing, via the one or more hardware processors, an intra-document clustering of each text document from the one or more text documents to obtain a document-level embedding. While performing the intra-document clustering, the plurality of chunk embeddings of each text document from the one or more text documents are processed using a sentence-level intra-document cluster screener to obtain the document-level embedding. Each of the document-level embeddings, from a plurality of document-level embeddings of the one or more text documents represents contextually relevant part of each text document from the one or more text documents. An intra-document similarity score is computed for each chunk embedding of the plurality of chunk embeddings using one or more similarity scoring algorithm. Then, clustering the plurality of chunk embeddings based on the intra-document similarity score of each chunk embedding, wherein a first pre-defined threshold of the intra-document similarity score is applied to obtain one or more intra-document clusters from the plurality of chunk embeddings. Each intra-document cluster represented by the intra-document cluster ID comprises one or more semantically related chunk embeddings identified with a chunk identification (ID). Then, an intra-document cluster prominence is computed by calculating a number of semantically related chunks in each intra-document cluster from the one or more intra-document clusters to obtain one or more strong intra-document clusters using the sentence-level cluster screener. One or more sentence-level intra-document cluster embeddings are derived from the one or more intra-document strong clusters, by aggregating one or more strong chunk embeddings from each intra-document cluster using one or more pooling algorithm. The document-level embedding from the one or more sentence-level intra-document cluster embeddings are derived by applying the one or more pooling algorithms, wherein the document-level embedding represents the contextually relevant part of each text document from the one or more text documents. The sentence-level intra-document cluster screener identifies the one or more strong intra-document clusters by steps (i) identifying a total number of sentence chunks in each intra-document cluster from the one or more intra-document clusters to obtain an intra-document cluster count, (ii) aggregating the intra-document cluster count of each intra-document cluster from the one or more intra-document clusters to obtain a frequency list, wherein the frequency list reflects semantic similarity within each text document of the one or more text documents, (iii) calculating standard deviation of the frequency list, and (iv) identifying one or more intra-document clusters having a frequency higher than the standard deviation of the frequency list, as the one or more strong intra-document clusters. The method further includes performing, via the one or more hardware processors, an inter-document clustering of the one or more text documents to obtain one or more inter-document clusters by segregating the plurality of document-level embeddings of the one or more text documents into the one or more inter-document clusters based on an inter-document similarity score. While executing the inter-document clustering of the one or more text documents an inter-document similarity score for each document-level embeddings from the plurality of document-level embeddings is computed using the one or more similarity algorithms. Then, the plurality of document-level embeddings are clustered into one or more inter-document clusters based on the inter-document similarity score derived for each text document. A second pre-defined threshold of the inter-document similarity score is applied to obtain the one or more inter-document clusters. The method further includes computing, via the one or more hardware processors, a cluster integrity and relevancy (CLIAR) index for the one or more inter-document clusters, wherein the CLIAR index is a certainty score to determines relevancy of each of the one or more inter-document clusters. Computation of the CLIAR index for the one or more inter-document clusters wherein the CLIAR index determines relevancy of the one or more inter-document clusters identified, and wherein the CLIAR index balances (i) an inter-document cluster integrity to ensure a cohesiveness of identified inter-document clusters, and (ii) an inter-document cluster relevancy based on the contextually relevant part of each text document from the one or more text documents. The method further includes retaining, via the one or more hardware processors, at least one inter-document cluster from among the one or more inter-document clusters that exceeds a pre-defined threshold of a normalized value of the CLIAR index. The at least one inter-document cluster from among the one or more inter-document clusters comprises one or more contextually relevant text documents with contextually relevant part of each text document from the one or more text documents.

In another aspect, a system for filtering contextually relevant content from large-scale textual datasets is provided. The system includes at least one memory storing programmed instructions, one or more Input/Output (I/O) interfaces, and one or more hardware processors, and a content filtering model 110 operatively coupled to a corresponding at least one memory. The system is configured to receive (i) one or more text documents, and (ii) one or more embedding models. Further, the system is configured to obtain a plurality of chunk embeddings with semantic information for each text document from the one or more text documents. Size of each text document from the one or more text documents is first validated based on a pre-defined window size and a pre-defined stride size. The plurality of chunk embeddings with semantic information are obtained from the one or more embedding models using a sliding window technique. Further, the system is configured to perform an intra-document clustering of each text document from the one or more text documents to obtain a document-level embedding. While performing the intra-document clustering, the plurality of chunk embeddings of each text document from the one or more text documents are processed using a sentence-level intra-document cluster screener to obtain the document-level embedding. Each of the document-level embeddings, from a plurality of document-level embeddings of the one or more text documents represents contextually relevant part of each text document from the one or more text documents. An intra-document similarity score is computed for each chunk embedding of the plurality of chunk embeddings using one or more similarity scoring algorithm. Then, clustering the plurality of chunk embeddings based on the intra-document similarity score of each chunk embedding, wherein a first pre-defined threshold of the intra-document similarity score is applied to obtain one or more intra-document clusters from the plurality of chunk embeddings. Each intra-document cluster represented by the intra-document cluster ID comprises one or more semantically related chunk embeddings identified with a chunk identification (ID). Then, an intra-document cluster prominence is computed by calculating a number of semantically related chunks in each intra-document cluster from the one or more intra-document clusters to obtain one or more strong intra-document clusters using the sentence-level cluster screener. One or more sentence-level intra-document cluster embeddings are derived from the one or more intra-document strong clusters, by aggregating one or more strong chunk embeddings from each intra-document cluster using one or more pooling algorithm. The document-level embedding from the one or more sentence-level intra-document cluster embeddings are derived by applying the one or more pooling algorithms, wherein the document-level embedding represents the contextually relevant part of each text document from the one or more text documents. The sentence-level intra-document cluster screener identifies the one or more strong intra-document clusters by steps (i) identifying a total number of sentence chunks in each intra-document cluster from the one or more intra-document clusters to obtain an intra-document cluster count, (ii) aggregating the intra-document cluster count of each intra-document cluster from the one or more intra-document clusters to obtain a frequency list, wherein the frequency list reflects semantic similarity within each text document of the one or more text documents, (iii) calculating standard deviation of the frequency list, and (iv) identifying one or more intra-document clusters having a frequency higher than the standard deviation of the frequency list, as the one or more strong intra-document clusters. Further, the system is configured to perform an inter-document clustering of the one or more text documents to obtain one or more inter-document clusters by segregating the plurality of document-level embeddings of the one or more text documents into the one or more inter-document clusters based on an inter-document similarity score. While executing the inter-document clustering of the one or more text documents an inter-document similarity score for each document-level embeddings from the plurality of document-level embeddings is computed using the one or more similarity algorithms. Then, the plurality of document-level embeddings are clustered into one or more inter-document clusters based on the inter-document similarity score derived for each text document. A second pre-defined threshold of the inter-document similarity score is applied to obtain the one or more inter-document clusters. Further, the system is configured to compute a cluster integrity and relevancy (CLIAR) index for the one or more inter-document clusters, wherein the CLIAR index is a certainty score to determines relevancy of each of the one or more inter-document clusters. Computation of the CLIAR index for the one or more inter-document clusters wherein the CLIAR index determines relevancy of the one or more inter-document clusters identified, and wherein the CLIAR index balances (i) an inter-document cluster integrity to ensure a cohesiveness of identified inter-document clusters, and (ii) an inter-document cluster relevancy based on the contextually relevant part of each text document from the one or more text documents. Further, the system is configured to retain at least one inter-document cluster from among the one or more inter-document clusters that exceeds a pre-defined threshold of a normalized value of the CLIAR index. The at least one inter-document cluster from among the one or more inter-document clusters comprises one or more contextually relevant text documents with contextually relevant part of each text document from the one or more text documents.

In yet another aspect, there are provided one or more non-transitory machine-readable information storage mediums comprising one or more instructions which when executed by one or more hardware processors cause: receive (i) one or more text documents, and (ii) one or more embedding models. The computer readable program, when executed on a computing device, causes the computing device to obtain a plurality of chunk embeddings with semantic information for each text document from the one or more text documents. The size of each text document from the one or more text documents is first validated based on a pre-defined window size and a pre-defined stride size. The plurality of chunk embeddings with semantic information are obtained from the one or more embedding models using a sliding window technique. The computer readable program, when executed on a computing device, causes the computing device to perform an intra-document clustering of each text document from the one or more text documents to obtain a document-level embedding. While performing the intra-document clustering, the plurality of chunk embeddings of each text document from the one or more text documents are processed using a sentence-level intra-document cluster screener to obtain the document-level embedding. Each of the document-level embeddings, from a plurality of document-level embeddings of the one or more text documents represents contextually relevant part of each text document from the one or more text documents. An intra-document similarity score is computed for each chunk embedding of the plurality of chunk embeddings using one or more similarity scoring algorithm. Then, clustering the plurality of chunk embeddings based on the intra-document similarity score of each chunk embedding, wherein a first pre-defined threshold of the intra-document similarity score is applied to obtain one or more intra-document clusters from the plurality of chunk embeddings. Each intra-document cluster represented by the intra-document cluster ID comprises one or more semantically related chunk embeddings identified with a chunk identification (ID). Then, an intra-document cluster prominence is computed by calculating a number of semantically related chunks in each intra-document cluster from the one or more intra-document clusters to obtain one or more strong intra-document clusters using the sentence-level cluster screener. One or more sentence-level intra-document cluster embeddings are derived from the one or more intra-document strong clusters, by aggregating one or more strong chunk embeddings from each intra-document cluster using one or more pooling algorithm. The document-level embedding from the one or more sentence-level intra-document cluster embeddings are derived by applying the one or more pooling algorithms, wherein the document-level embedding represents the contextually relevant part of each text document from the one or more text documents. The sentence-level intra-document cluster screener identifies the one or more strong intra-document clusters by steps (i) identifying a total number of sentence chunks in each intra-document cluster from the one or more intra-document clusters to obtain an intra-document cluster count, (ii) aggregating the intra-document cluster count of each intra-document cluster from the one or more intra-document clusters to obtain a frequency list, wherein the frequency list reflects semantic similarity within each text document of the one or more text documents, (iii) calculating standard deviation of the frequency list, and (iv) identifying one or more intra-document clusters having a frequency higher than the standard deviation of the frequency list, as the one or more strong intra-document clusters. The computer readable program, when executed on a computing device, causes the computing device to perform an inter-document clustering of the one or more text documents to obtain one or more inter-document clusters by segregating the plurality of document-level embeddings of the one or more text documents into the one or more inter-document clusters based on an inter-document similarity score. While executing the inter-document clustering of the one or more text documents an inter-document similarity score for each document-level embeddings from the plurality of document-level embeddings is computed using the one or more similarity algorithms. Then, the plurality of document-level embeddings are clustered into one or more inter-document clusters based on the inter-document similarity score derived for each text document. A second pre-defined threshold of the inter-document similarity score is applied to obtain the one or more inter-document clusters. The computer readable program, when executed on a computing device, causes the computing device to compute a cluster integrity and relevancy (CLIAR) index for the one or more inter-document clusters, wherein the CLIAR index is a certainty score to determines relevancy of each of the one or more inter-document clusters. Computation of the CLIAR index for the one or more inter-document clusters wherein the CLIAR index determines relevancy of the one or more inter-document clusters identified, and wherein the CLIAR index balances (i) an inter-document cluster integrity to ensure a cohesiveness of identified inter-document clusters, and (ii) an inter-document cluster relevancy based on the contextually relevant part of each text document from the one or more text documents. The computer readable program, when executed on a computing device, causes the computing device to retain at least one inter-document cluster from among the one or more inter-document clusters that exceeds a pre-defined threshold of a normalized value of the CLIAR index. The at least one inter-document cluster from among the one or more inter-document clusters comprises one or more contextually relevant text documents with contextually relevant part of each text document from the one or more text documents.

It is to be understood that both the foregoing general description and the following detailed description are exemplary and explanatory only and are not restrictive of the invention, as claimed.

### BRIEF DESCRIPTION OF DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system 100 for filtering contextually relevant content from large-scale textual datasets, according to some embodiments of the present disclosure.
FIGS. 2A-2C show elements of a content filtering model 110 elaborating flow of the contextually relevant content filtering of the large-scale textual datasets, according to some embodiments of the present disclosure.
FIGS. 3A-3C are flow diagrams of an illustrative method 300 for filtering contextually relevant content from large-scale textual datasets, using the system of FIG. 1, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In the present disclosure, a method of screening large datasets with multi-level clustering is provided. The method of the present disclosure performs a two-level clustering at both an intra-document and an inter-document levels to extract context relevant data. The method screens semantically similar sentence chunks at intra-document level to create a concise intra-document embeddings with contextually relevant text data. Further, an inter-document level clustering is performed by computing a cluster integrity and relevancy (CLIAR) index on a plurality of intra-document embeddings to isolate inter-document cluster having semantic representation of contextually relevant contents.

As used herein, the term *'large-scale text dataset'* refers to a combination of text documents that are to be scanned for context relevant content filtering so that one or more meaningful insights can be derived,

As used herein, the term *'chunk embeddings'* refers to a plurality of a numerical representation of text, transformed in the form of dense vectors that captures the semantic meaning of the text.

As used herein, the term *sentence-level embedding'* refers to a representation of a sentence as a vector of numbers which encodes meaningful semantic information wherein one or more similar chunk embeddings within the text document are aggregated to form a sentence-level embedding.

As used herein, the term *'document-level embeddings' refers to a* combination of the one or more sentence-level embeddings within the text document which encodes meaningful semantic information wherein the one or more similar sentence embeddings within the text document are aggregated to form the document-level embedding

As used herein, the term *'intra-document similarity score'* refers to a pair-wise similarity between one or more chunk embeddings within the text document using one or more similarity score algorithms like cosine similarity, euclidean distance, Jaccard distance, word mover's distance and the like.

As used herein, the term *'inter-document similarity score'* refers to a pair-wise similarity between one or more document-level embeddings across one or more text documents of the large-scale dataset using one or more similarity score algorithms like cosine similarity, euclidean distance, Jaccard distance, word mover's distance and the like.

As used herein, the term *'intra-document cluster'* refers to a combination of chunk embeddings of relevant text within a single text document wherein relevancy of the chunk embeddings are derived on the basis of the intra-document similarity score.

As used herein, the term *'inter-document cluster'* refers to a combination of document-level embeddings of relevant documents across a large-scale text dataset wherein relevancy of the document-level embeddings are derived on the basis of an inter-document similarity score.

As used herein, the term *'cluster integrity and relevancy or (CLIAR) index'* refers to a certainty-based metric that quantifies the relevance of the inter-document clusters by computing the proportion of a largest cluster and a plurality of unique clusters within the large-scale text dataset.

As used herein, the term *'first pre-defined threshold'* refers to a cut-off value to group one or more similar chunk embeddings based on the intra-document similarity score, wherein the first pre-defined threshold is set towards 1 in a scale of 0 to 1 so that the one or more similar chunk embeddings can be extracted.

As used herein, the term *'second pre-defined threshold'* refers to a cut-off value to group one or more document-level embeddings based on the inter-document similarity score, wherein the second pre-defined threshold is set closer to 1 in a scale of 0 to 1 so that the one or more similar document-level embeddings can be extracted.

As used herein, the term 'frequency list' refers to a numerical representation of the occurrence count of the one or more intra-document clusters within a text document that is used to determine the relative strength of the one or more intra-document clusters.

As used herein, the term *'intra-document strong clusters'* refers one or more intra-document clusters whose frequency exceeds a pre-defined threshold derived from the statistical distribution of standard deviation of frequency list within the text document.

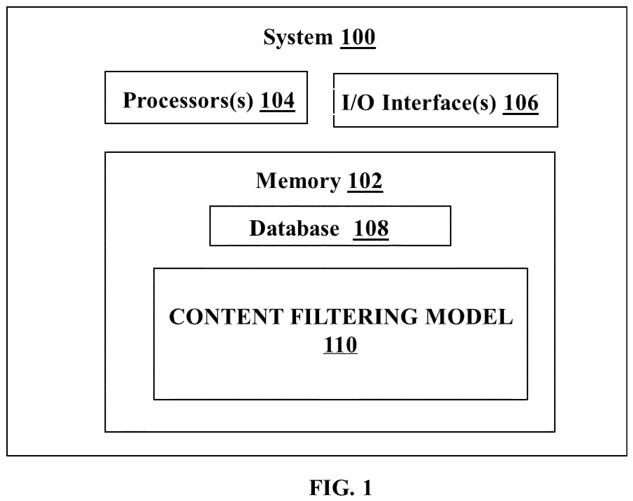

Referring now to the drawings, and more particularly to FIG. 1 through FIG. 3C, where similar reference characters denote corresponding features consistently throughout the figures, there are shown preferred embodiments, and these embodiments are described in the context of the following exemplary system and/or method.

FIG. 1 illustrates an exemplary block diagram of a system 100 for filtering contextually relevant content from large-scale textual datasets, according to some embodiments of the present disclosure.

In an embodiment, the system 100 includes a processor(s) 104, communication interface device(s) 106, alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100. Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102.

In an embodiment, the system 100 can be implemented in a variety of computing systems including laptop computers, notebooks, hand-held devices such as mobile phones, workstations, mainframe computers, servers, and the like. The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like.

In an embodiment, the I/O interface (s) 106 can include one or more ports for connecting to number of external devices or to another server or devices. The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 102 includes a content filtering model 110. The content filtering model performs the content filtering by utilizing a multi-level clustering and aggregation approach. The content filtering model 110 processes large amount of datasets comprising a plurality of text documents to retrieve contextually relevant information. The content filtering model 110 performs intra-document scanning to extract one or more relevant content from each document of a dataset based on the context provided. The content filtering model 110 further performs inter-document scanning to extract one or more relevant documents from the dataset. This involves two-level clustering and aggregation approach at both the intra-document level as well as the inter-document level. With this two-level clustering and aggregation approach a domain-specific and coherent material is produced from diverse enterprise data sources.

The content filtering model 110 identifies and filters one or more clusters of semantically similar sentence chunks based on a pre-define threshold values for relevance. This segregates the one or more text documents into one or more clusters. The one or more clusters with high relevancy and the one or more clusters with low relevancy are derived based on standard deviation of cluster frequencies as strong clusters and weak clusters. This ensures retention of meaningful, high-relevance content while filtering out less significant information. The content filtering model 110 analyzes the one or more text documents in the large dataset using a certainty-based metric called Cluster integrity and relevancy index (CLIAR) index, isolating the most relevant text document clusters to extract high-quality insights. The CLIAR index balances (i) an inter-document cluster integrity to ensure a cohesiveness of identified inter-document clusters, and (ii) an inter-document cluster relevancy based on the contextually relevant part of each text document from the one or more text documents.

The memory 102 further comprises of a plurality of modules that includes programs or coded instructions that supplement applications or functions performed by the system 100 for executing different steps involved in the micro-batch processing, being performed by the system 100. The modules, amongst other things, can include routines, programs, objects, components, and data structures, which perform particular tasks or implement particular abstract data types. The modules may also be used as signal processor(s), node machine(s), logic circuitries, and/or any other device or component that manipulates signals based on operational instructions. Further, the modules can be used by hardware, by computer-readable instructions executed by the one or more hardware processors 104, or by a combination thereof. The modules may include computer-readable instructions that supplement applications or functions performed by the system 100. Further, the memory 102 may comprise information pertaining to input(s)/output(s) of each step performed by the processor(s) 104 of the system100 and methods of the present disclosure. Further, the memory 102 includes a database 108. The database (or repository) 108 may include a plurality of abstracted pieces of code for refinement and data that is processed, received, or generated as a result of the execution of the plurality of modules. The external database is communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

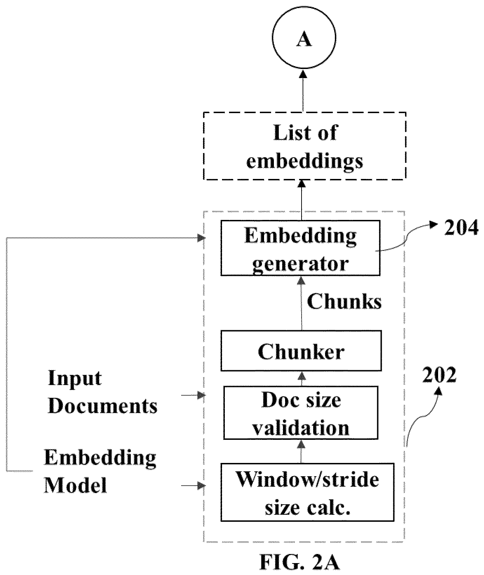

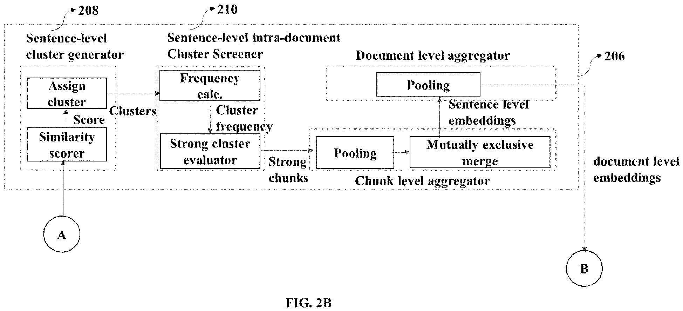

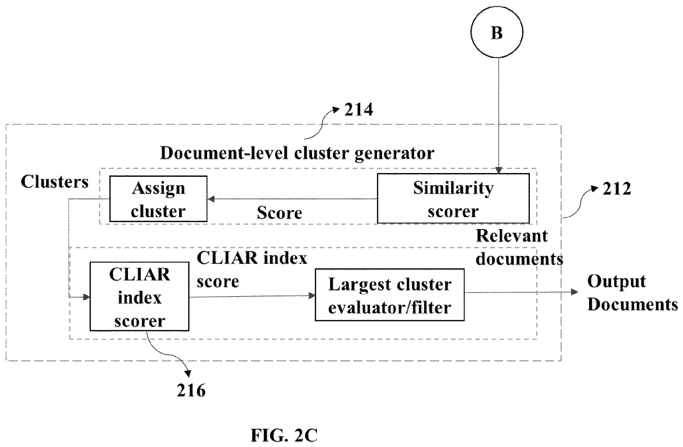

FIGS. 2A-2C show elements of a content filtering model 110 elaborating flow of the contextually relevant content filtering of the large-scale textual datasets, according to some embodiments of the present disclosure.

As illustrated in the FIGS. 2A-2C, contextually relevant content filtering of the large-scale textual datasets involves at least one user and a content filtering model 110. The content filtering model 110 comprises a dissection module 202, an embedding generator 204, an intra-document clustering module 206, a sentence-level cluster generator 208, a sentence-level intra-document cluster screener 210, an inter-document clustering module 212, a document-level cluster generator 214, and a CLIAR index scorer 216. The dissection module 202 receives one or more text documents from the large-scale dataset to be scanned for contextually relevant content filtering, and at least one embedding model. The contextually relevant content filtering from the content filtering model 110 explicitly requires the embedding model specification. Based on the embedding model selected by the user, the dissection module 202 assigns a window size and a stride size for a chunking operation. The dissection module 202 performs size assessment by validating input data size (tokens) against the window/stride size to finalize the one or more text documents for the chunking operation. Post chunking, the dissection module 202 generates a plurality of chunk embeddings for each text document of the one or more text documents using an embedding generator 204 that utilizes the embedding model input to the dissection module 202. The output is the plurality of chunk embeddings for each text document of the one or more text documents capturing semantic information at the chunk level.

The intra-document clustering module 206 performs a first level content filtering by executing an intra-document clustering of each text document from the one or more text documents to obtain a document-level embedding. The plurality of chunks within each text document is processed by a sentence-level cluster generator 208 wherein the sentence-level cluster generator 208 calculates a similarity score for each chunk of the plurality of chunks, and based on the similarity score, the one or more text documents are clustered into one or more intra-document clusters. The one or more intra-document clusters are provided to a sentence-level intra-document cluster screener 210. The sentence-level intra-document cluster screener 210 calculates frequency of one or more similar sentences appearing in the one or more intra-document clusters and further segregates the one or more intra-document clusters into one or more weak intra-document clusters and one or more strong intra-document clusters based on the frequency. This is a refinement stage of the dataset. The one or more strong intra-document clusters are provided to a chunk level aggregator and then to a document level aggregator to generate the document-level embedding. The chunk level aggregator processes the strong intra-document clusters by one or more pooling algorithms to generate one or more sentence-level embeddings, and the document level aggregator processes the one or more sentence level embedding by the one or more pooling algorithms to generate the one or more document-level embeddings.

The inter-document clustering module 212 receives the one or more document-level embeddings from the intra-document clustering module 206 and performs a second level content filtering. The one or more document-level embeddings within each text document is processed by a document-level cluster generator 214 wherein the document-level cluster generator 214 calculates a similarity score for each document embedding of the one or more document embeddings, and based on the similarity score, the one or document-level embeddings are clustered into one or more inter-document clusters. A cluster integrity and relevancy (CLIAR) index for the one or more inter-document clusters is computed using a CLIAR Index scorer 216. The CLIAR index is a certainty score to determine the relevancy of each of the one or more inter-document clusters. The CLIAR index balances (i) an inter-document cluster integrity to ensure a cohesiveness of identified inter-document clusters, and (ii) an inter-document cluster relevancy based on the contextually relevant part of each text document from the one or more text documents. The inter-document clustering module 212 extracts at least one inter-document cluster from among the one or more inter-document clusters that exceeds a pre-defined threshold of a normalized value of the CLIAR index. The at least one inter-document cluster from among the one or more inter-document clusters comprises one or more contextually relevant text documents with contextually relevant part of each text document from the one or more text documents.

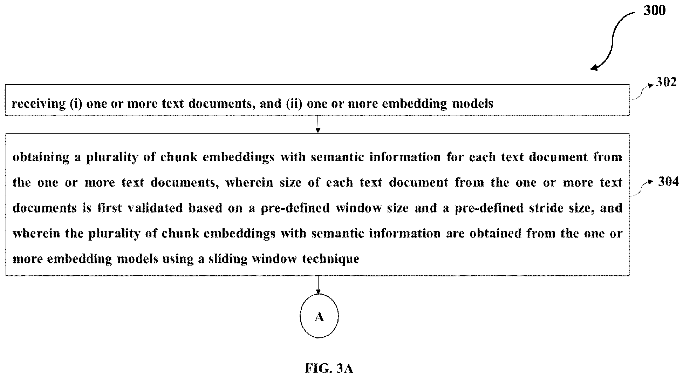

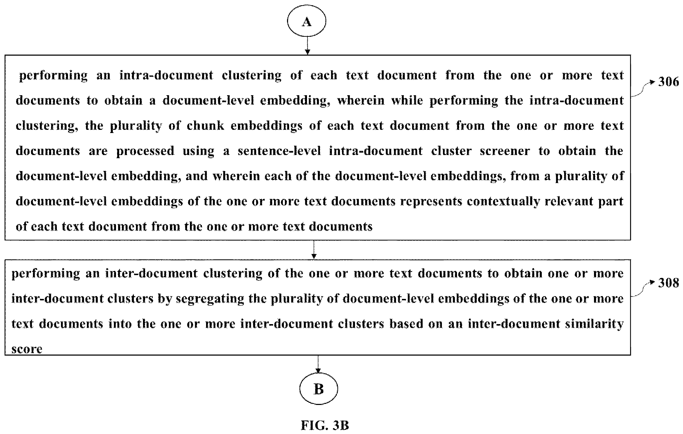

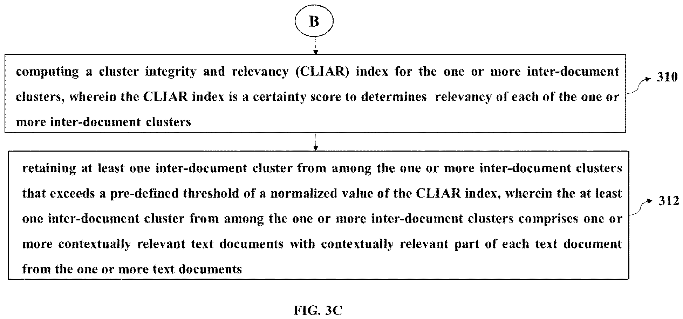

FIGS. 3A-3C are flow diagrams of an illustrative method 300 for filtering contextually relevant content from large-scale textual datasets, using the system of FIG. 1, according to some embodiments of the present disclosure.

The steps of the method 300 of the present disclosure will now be explained with reference to the components or blocks of the system 100 as depicted in FIG. 1. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practically. Further, some steps may be performed simultaneously.

At step 302 of the method 300, the one or more hardware processors 104 are configured to receive (i) one or more text documents, and (ii) one or more embedding models. The one or more text documents are provided as a large-scale dataset from which context-based content filtering is to be executed by the system 100. The one or more embedding model is specified at the start to that a chunk processing operation can be in synchronization with the embedding model selected. Each embedding model comes with limitation of an upper limit of information (tokens) that can be processed at a time. In an embodiment, a LaBSE is used as the embedding model. However, other embedding models that can be utilized for generation of embeddings include a sentence transformer (SBERT), a Decoding-enhanced BERT with Disentangled Attention (DeBERTa), a Davinci, an (Ada), a Code T5 (T5) etc.]

At step 304 of the method 300, the one or more hardware processors 104 are configured to obtain a plurality of chunk embeddings with semantic information for each text document from the one or more text documents. The size of each text document from the one or more text documents is first validated based on a pre-defined window size and a pre-defined stride size. The plurality of chunk embeddings with semantic information are obtained from the one or more embedding models using a sliding window technique. Based on a maximum token limit for the one or more embedding models, the pre-defined window size and the pre-defined stride size is specified which is further used for a chunking operation. For e.g. if the maximum token limit for the embedding model is 512, a suitable window size of 128 is decided representing a group of roughly 10 sentences. Similarly, a stride half the size of a window i.e. 64 is chosen to retain context from previous section of sentences. Therefore, the input data size (tokens) for each text document of the one or more text documents is validated against the window/stride size to finalize the one or more text documents for the chunking operation. Data in each text document of the one or more text documents is broken into chunks using a sliding window approach. For e.g. an embedding model that can process maximum of 512 tokens at a time, window and stride size is calculated as 128 words and 64 words respectively. Accordingly, each chunk consists of 128 words(window) and an overlapping of 64 words(stride). This approach ensures chunking prepares the data for embedding generation without losing meaningful context. A plurality of chunk embeddings is generated for each text document of the one or more text documents using the embedding model. Each chunk embedding from the plurality of chunk embeddings for each text document of the one or more text documents captures semantic information at the chunk level.

At step 306 of the method 300, the one or more hardware processors 104 are configured to perform an intra-document clustering of each text document from the one or more text documents to obtain a document-level embedding. While performing the intra-document clustering, the plurality of chunk embeddings of each text document from the one or more text documents are processed using a sentence-level intra-document cluster screener to obtain the document-level embedding. Each of the document-level embeddings, from a plurality of document-level embeddings of the one or more text documents represents contextually relevant part of each text document from the one or more text documents. sentence-level intra-document cluster screener scans data within each text document and produces a reduced version of each text document with the most relevant data to be processed further.

An intra-document similarity score is calculated for each chunk-embedding of the plurality of chunk embeddings of each text document from the one or more text documents. The intra-document similarity score is derived from one or more similarity algorithms. In an embodiment, a cosine similarity algorithm is used for computing the intra-document similarity score. The plurality of chunk embeddings are clustered based on the intra-document similarity score of each chunk embedding, wherein a first pre-defined threshold of the intra-document similarity score is applied to obtain one or more intra-document clusters from the plurality of chunk embeddings. Each intra-document cluster represented by the intra-document cluster ID comprises one or more semantically related chunk embeddings identified with a chunk identification (ID). The clustering allows for analysing similarities within document chunks, which is critical for further steps. Further, an intra-document cluster prominence is computed by calculating number of semantically related chunks in each intra-document cluster from the one or more intra-document clusters to obtain one or more strong intra-document clusters using the sentence-level intra-document cluster screener. The sentence-level intra-document cluster screener identifies the one or more strong intra-document clusters by identifying a total number of sentence chunks in each intra-document cluster from the one or more intra-document clusters to obtain an intra-document cluster count. Then, the intra-document cluster count of each intra-document cluster from the one or more intra-document clusters are aggregated to obtain a frequency list, wherein the frequency list reflects semantic similarity within each text document of the one or more text documents. Further standard deviation of the frequency list is calculated. And one or more intra-document clusters having a frequency higher than the standard deviation of the frequency list are identified as the one or more strong intra-document clusters.

For each intra-document cluster generated, the total count of chunk embeddings assigned to the intra-document cluster is computed. This count reflects how frequently similar sentence chunks appear in the text document providing a measure of the cluster's prominence. The intra-document clusters with frequencies higher than standard deviation of the frequency list are considered strong clusters. This ensures that only the most prominent intra-document clusters (based on frequency) are retained for further processing. The corresponding chunk embeddings from the plurality of chunk embeddings and an associated strings with the intra-documents strong clusters are extracted.

Further, one or more sentence-level intra-document cluster embeddings are derived from the one or more intra-document strong clusters, by aggregating one or more strong chunk embeddings from each intra-document cluster using one or more pooling algorithm. In an embodiment, the one or more strong chunk embeddings are aggregated using the one or more average pooling to form the sentence-level intra-document cluster embeddings. This is followed by a mutually exclusive merge wherein one or more strong intra-document clusters strings are merged, ensuring that any overlapping content created during the chunking phase is properly removed. This aggregation step reduces the dimensionality and prepares the document for higher-level analysis.

Finally, the document-level embedding is derived for each text document from the one or more text documents. The document-level embedding is derived from the one or more sentence-level intra-document cluster embeddings by applying the one or more pooling algorithms, wherein the document-level embedding represents the contextually relevant part of each text document from the one or more text documents. In an embodiment, once the sentence-level intra-document clusters are generated, an average pooling is applied again to form the document-level embedding. This represents an aggregated embedding that provides a summary representation of the most talked-about parts in the text document.

At step 308 of the method 300, the one or more hardware processors 104 are configured to perform an inter-document clustering of the one or more text documents to obtain one or more inter-document clusters. The plurality of document-level embeddings of the one or more text documents are segregated into the one or more inter-document clusters based on an inter-document similarity score. In the inter-document clustering, the one or more text documents within the large text dataset are scanned for content filtering. The inter-document similarity score is computed for each document-level embeddings from the plurality of document-level embeddings using the one or more similarity algorithms. The plurality of document-level embeddings are clustered into one or more inter-document clusters based on the inter-document similarity score derived for each text document, wherein a second pre-defined threshold of the inter-document similarity score is applied to obtain the one or more inter-document clusters.

In an embodiment, the inter-document similarity score is calculated for each document-level embedding using the one or more similarity algorithms. In an embodiment, the one or more similarity algorithm is the cosine similarity.

In an embodiment, the document-level embeddings are grouped based on the cosine similarity (a semantic similarity) between the one or more document-level embeddings of each text document.

At step 310 of the method 300, the one or more hardware processors 104 are configured to compute a cluster integrity and relevancy (CLIAR) index for the one or more inter-document clusters. The CLIAR index is a certainty score to determine relevancy of each of the one or more inter-document clusters. The CLIAR index for the one or more inter-document clusters determines relevancy of the one or more inter-document clusters identified. The CLIAR index balances (i) an inter-document cluster integrity to ensure a cohesiveness of identified inter-document clusters, and (ii) an inter-document cluster relevancy based on the contextually relevant part of each text document from the one or more text documents. The inter-document clusters are processed by an inter-document level cluster screener. This is considered as a final filtering process is conducted to extract a suitable largest cluster of the one or more text documents. Traditionally the uncertainty-based metrics work on measuring entropy which focuses on the diversity of content, prioritizing scattered clusters instead of cohesive ones. Moreover, entropy could generate duplicate scores for different sets of semantic cluster IDs, failing to effectively distinguish between inter-document clusters. This called for the inclusion of additional parameters that could not only reflect the dominance of the most cohesive cluster but also account for the diversity across them. Ensuring that the overall number of inter-document clusters does not skew the evaluation is kept imperative. This involved computing a certainty score based on:
*E* is an entropy that measures diversity within the inter-document cluster leveraging probability of each inter-document cluster represented by a cluster ID,
*LC* is a largest inter-document cluster size representing number of text documents in the largest cluster,
*UC* represents number of inter-document clusters formed during an inter-document screening of the one or more text documents, and
*N* is total number of text documents in the one or more inter-document clusters.

The final score is calculated as: $CLIAR Index = \left(1-E\right) + \left(\frac{LC}{N}\right) - \left(\frac{UC}{N}\right) ,$ where,
- (1 *- E*): This term inversely relates to entropy. Lower entropy (more order) increases the certainty score, indicating more confidence in the clustering structure. High entropy signals randomness or inconsistency, lowering the certainty score.
- (*LC*/*N*)): The ratio of the largest cluster to the total number of text documents shows dominance or concentration of similar content. A high value means that the largest cluster captures most of the content, contributing positively to the certainty.
- (*UC*/*N*): The ratio of unique clusters to the total number of text documents. A higher number of unique clusters typically introduces more diversity or complexity, which can reduce certainty since the focus is to consider strong thematic clusters. Hence, it is subtracted.

The name "CLIAR Index" represents the dual focus of the scoring formula: maintaining Cluster Integrity to ensure the cohesiveness of identified clusters while assessing their relevancy to the main theme or goal of the analysis. The name reflects the formula's ability to balance these two critical dimensions, providing a reliable measure for filtering and evaluating document clusters effectively.

At step 312 of the method 300, the one or more hardware processors 104 are configured to retain at least one inter-document cluster from among the one or more inter-document clusters that exceeds a pre-defined threshold of a normalized value of the CLIAR index. The at least one inter-document cluster from among the one or more inter-document clusters comprises one or more contextually relevant text documents with contextually relevant part of each text document from the one or more text documents. In an embodiment, the at least one inter-document cluster from the one or more inter-document clusters exceeds the pre-defined threshold of 0.2 (the normalized value of the CLIAR index) and the at least one inter-document cluster from the one or more inter-document clusters is considered a good inter-document cluster that apparently represents a largest inter-document cluster.

In an embodiment, a plurality of constraints such as no ties in the largest inter-document cluster size is enforced to ensure consistent outputs and exclude clearly bad clusters.

In an embodiment, an output is a list of strings corresponding to the one or more documents in the largest inter-document cluster. This ensures only the relevant parts of the relevant documents are obtained at the end, providing a focused and coherent set of insights.

### USE CASE:

An example scenario depicting the method of filtering contextually relevant content from large-scale textual datasets performed by the disclosed system 100 is described. For filtering contextually relevant content from large-scale textual datasets, the content filtering model 110 receives one or more text documents in the form of large text dataset. An objective is to extract relevant text from a set of documents related to the company "Parloa" within the domain of Contact Centers. The content filtering model 110 scans the large text dataset in three stages, viz. (i) a dissection, (ii) an intra-document scanning to generate a document-level embedding, and (iii) an inter-document scanning to generate a cluster comprising one or more contextually relevant text documents with contextually relevant part of each text document from the one or more text documents. The sequential processing of the one or more text documents is presented below.

STAGE-I: Dissection: The dissection module 202 receives (a) a text data, and (b) an embedding model as input to generate (c) a plurality of chunk embedding. The dissection model 202 receives Language-agnostic BERT Sentence Embedding (LaBSE) as the embedding model. The LaBSE model encodes text into high dimensional vectors. The LaBSE model is trained and optimized to produce similar representations exclusively for bilingual sentence pairs that are translations of each other. So, it can be used for mining for translations of a sentence in a larger corpus. The text data converted to the plurality of chunk embeddings is provided to intra-document the intra-document clustering module 204 to execute the intra-document scanning to generate the document-level embedding.

STAGE-II: Intra-document clustering/aggregation: This module scans data within a document and produces a reduced version of the document with the most relevant data to process further. The sentence-level cluster generator computes the intra-document similarity score using the cosine similarity algorithm and segregates the chunk embeddings into one or more intra-document clusters by applying a threshold of 0.6 on the intra-document similarity score to identify similar chunk embeddings that represents groups of semantically related sentences or chunks. The sentence-level cluster screener computes the total count of sentence chunks assigned to the intra-document cluster to derive the cluster's prominence. Further the intra-document chunk level aggregation is performed using the average pooling algorithm to form sentence-level intra-document cluster embeddings. Once the sentence-level clusters are generated, again the average pooling algorithm is applied to form the document-level embedding. This aggregated embedding provides a summary representation of the most talked-about parts in a document.

STAGE-III: Inter-document clustering/ aggregation: The inter-document clustering module 206 is module receives each document-level embedding and scans across data to generate most relevant set of documents. The document-level cluster generator of the inter-level document clustering module 206 computes the inter-document similarity score using the cosine similarity algorithm and further segregates the documents by applying a high similarity threshold of 0.8 to ensures that only documents with substantial overlap in meaning are grouped together preventing loosely related ones from being clustered. Resulting clusters represent collections of documents that share core ideas, facilitating focused analysis. Further, the CLIAR Index is computed to ensure the cohesiveness of identified clusters as well as relevancy with respect to the objective. The value of CLIAR index is 0.36348583190518713. And Normalized CLIAR Index is 0.23032040585479333. The normalized score of the CLIAR index is evaluated and found to cross the pre-define threshold of 0.2 and hence considered the largest cluster with relevant documents and each document with relevant text. The specifications as well as the input and the output of all the three stages are given in Table-1 as:

**Table-1**

| | | | |
|---|---|---|---|
| **Objective:** To extract relevant text from a set of documents related to the company "Parloa" within the domain of Contact Centers. | | | |
| Window size permitted as per LaBSE: 1-512 Window size taken: 128 | | | |
| Stride size permitted as per LaBSE: 1-512 Stride size taken: 64 | | | |
| STAGE-I | | | |
| Input (Text documents) | | | |

| Document (Doc) 1 | | Doc 2 | Doc 3 |
|---|---|---|---|
| At a time of unprecedented technological innovation, insurance companies are undergoing transformation spearheaded ... those who act now secure a competitive advantage in a constantly changing industry. | | E-commerce is an incredibly dynamic industry where limitless shopping meets high customer service demands. All this is driven by ... service is only successful if it works well for customers, agents, and businesses. | We are proud to announce Stefan F. Heidenreich as Senior Advisor at Parloa. Stefan is one of Germany's most renowned ... working with Stefan and shaping the future of Parloa together. |

| Output (chunk embeddings) | | | |
|---|---|---|---|
| Chunk 1: [-0.01485194 0.02445279 0.03232789 ... 0.04954233 -0.02184448 - 0.0551454 ] | | Chunk 1: [-0.01485194 0.02445279 0.03232789 ... 0.04954233 - 0.02184448 - 0.0551454 ] | |
| | | | Chunk 1: [-0.01485194 0.02445279 0.03232789 ... 0.04954233 - 0.02184448 - 0.0551454 ] |
| Chunk 2: [-0.00800688 0.02357711 0.03560361 ... 0.05851978 -0.03953223 - 0.05273497] | | | |
| | | Chunk 2: [-0.00800688 0.02357711 0.03560361 ... 0.05851978 - 0.03953223 - 0.05273497] | Chunk 2: [-0.00800688 0.02357711 0.03560361 ... 0.05851976 - 0.03953222 - 0.05273497] |
| Chunk 3: [-0.02189959 0.02253407 0.02609064 ... 0.05438196 -0.04572886 - 0.05149429] | | | |
| . | | | |
| . | | | Chunk 3: [-0.0218996 |
| Chunk 34: [-0.03303839 0.02046055 0.03500006 ... 0.0533558 -0.07369819 - 0.02243299] | | Chunk 3: [-0.02189959 0.02253407 0.02609064 ... 0.05438196 - | 0.02253407 0.02609064 ... 0.05438195 - 0.04572887 - 0.0514943] |
| | | 0.04572886 - | . |
| | | 0.05149429] | . |
| | | . | . |
| | | . | Chunk 10: [-0.00150234 - 0.07868361 0.04373839 ... - 0.02712836 - 0.0174658 0.01964266] |
| | | . | |
| | | Chunk 28: [-0.0234737 0.01003379 0.0342124 ... 0.04940243 - 0.07414521-0.00881458] | |

| STAGE-II | | | |
|---|---|---|---|
| Intra-Document Similarity Score: | | | |
| *Cosine Similarity* (*A*, *B*) = (*A* · *B*) / (∥*A*∥ * ∥*B*∥) | | | |
| Where A and B are chunk embeddings | | | |
| Number of clusters formed | 5 | 5 | 3 |
| Frequency of Clusters | [22 8 2 1 1] | [193222] | [6 3 1] |
| Standard Deviation | 8.034923770640265 | 6.7111846942250075 | 2.0548046676563256 |
| No. of strong intra-document clusters | 1 | 1 | 1 |
| CLUSTER ID | [0, 0, 0, 0, 0, 1, 1, 0, 1, 1, 0, 1, 2, 0, 0, 0, 1, 0, 0, 0, 1, 0, 1, 3, 0, 0, 0, 0, 0, 2, 0, 0, 0, 4] | [0, 0, 0, 0, 0, 1, 1, 1, 2, 2, 0, 0, 0, 0, 0, 0, 0, 0, 0, 3, 3, 0, 0, 0, 0, 0, 4, 4] | [0, 0, 0, 0, 1, 1, 1, 0, 0, 2] |

| Output of STAGE-II (document level embedding) | | | |
|---|---|---|---|
| Document embedding of Doc1 | | Document embedding of Doc2 | Document embedding of Doc3 |
| [-0.025439 -0.02866934 0.03793808 ... 0.06129167 - 0.03854624 -0.05358769] | | [-0.03109487 - 0.01123241 0.03571561 ... 0.04441938 - 0.03734409 - 0.05088116] | [-0.02008973 - 0.0216598 0.041335 ... 0.03881541 - 0.06463846 - 0.03287133] |
| Number of clusters formed | | 2 | |
| CLUSTER REPRESENTATION | | Cluster1: Doc1, Doc 2 | Cluster 2: Doc 3 |

| STAGE-III | | | |
|---|---|---|---|
| Input to Stage-III (document embeddings of the cluster) | | | |
| Document embedding of Doc1 | | | Document embedding of Doc2 |
| [-0.025439 -0.02866934 0.03793808 ... 0.06129167 -0.03854624 -0.05358769] | | | [-0.03109487 -0.01123241 0.03571561 ... 0.04441938 - 0.03734409 -0.05088116] |

| Inter-Document Similarity Score: | | | |
|---|---|---|---|
| *Cosine Similarity* (*A*, *B*) = (*A* • *B*) / (∥*A*∥ * ∥*B*∥) | | | |
| Where A and B are chunk embeddings | | | |
| Based on inter-doc similarity score, documents in a cluster Formula are narrowed down and CLAIR index is computed as: | | | |
| CLAIR INDEX: 0.36348583190518713 | | | |
| NORMALIZED CLIAR INDEX: 0.23032040585479333 | | | |

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements with insubstantial differences from the literal language of the embodiments described herein.

Therefore, the present disclosure provides the method of filtering contextually relevant content from large-scale textual datasets using multi-level clustering and aggregation approach. The present disclosure implements multi-level clustering and aggregation approach to process the large datasets comprising one or more text documents. The multi-level clustering and aggregation involves an intra-document screening and an inter-document screening. Both the intra-document screening and the inter-document screening is performed to reduce the one or more text documents to the most meaningful and relevant set of text documents. The relevant set of text documents is processed further by making use of LLMs to achieve better accuracy and lowering down the inference cost.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method of filtering large-scale textual datasets, the method comprising:
receiving, via one or more hardware processors, (i) one or more text documents, and (ii) one or more embedding models;
obtaining, via the one or more hardware processors, a plurality of chunk embeddings with semantic information for each text document from the one or more text documents, wherein size of each text document from the one or more text documents is first validated based on a pre-defined window size and a pre-defined stride size, wherein the pre-defined window size and the pre-defined stride size is specified as per the embedding model chosen, and wherein the plurality of chunk embeddings with semantic information are obtained from the one or more embedding models using a sliding window technique;
performing, via the one or more hardware processors, an intra-document clustering of each text document from the one or more text documents to obtain a document-level embedding, wherein while performing the intra-document clustering, the plurality of chunk embeddings of each text document from the one or more text documents are processed using a sentence-level intra-document cluster screener to obtain the document-level embedding, and wherein each of the document-level embeddings, from a plurality of document-level embeddings of the one or more text documents represents contextually relevant part of each text document from the one or more text documents;
performing, via the one or more hardware processors, an inter-document clustering of the one or more text documents to obtain one or more inter-document clusters by segregating the plurality of document-level embeddings of the one or more text documents into the one or more inter-document clusters based on an inter-document similarity score; computing, via the one or more hardware processors, a cluster integrity and relevancy (CLIAR) index for the one or more inter-document clusters, wherein the CLIAR index is a certainty score to determines relevancy of each of the one or more inter-document clusters; and
retaining, via the one or more hardware processors, at least one inter-document cluster from among the one or more inter-document clusters that exceeds a pre-defined threshold of a normalized value of the CLIAR index, wherein the at least one inter-document cluster from among the one or more inter-document clusters comprises one or more contextually relevant text documents with contextually relevant part of each text document from the one or more text documents.

2. The method as claimed in claim 1, wherein the CLIAR index is represented as: $CLIAR INDEX = \left(1-E\right) + \left(LC/N\right) - \left(UC/N\right) ,$ where
*E* is an entropy that measures diversity within the inter-document cluster leveraging probability of each inter-document cluster represented by a cluster ID,
*LC* is a largest inter-document cluster size representing number of text documents in the largest cluster,
*UC* represents number of inter-document clusters formed during an inter-document screening of the one or more text documents, and
*N* is total number of text documents in the one or more inter-document clusters.

3. The method as claimed in claim 1, wherein the intra-document clustering is performed by a process comprising steps:
computing an intra-document similarity score for each chunk embedding of the plurality of chunk embeddings using one or more similarity scoring algorithm;
clustering the plurality of chunk embeddings based on the intra-document similarity score of each chunk embedding, wherein a first pre-defined threshold of the intra-document similarity score is applied to obtain one or more intra-document clusters from the plurality of chunk embeddings, and wherein each intra-document cluster represented by the intra-document cluster ID comprises one or more semantically related chunk embeddings identified with a chunk identification (ID);
computing an intra-document cluster prominence by calculating a number of semantically related chunks in each intra-document cluster from the one or more intra-document clusters to obtain one or more strong intra-document clusters using the sentence-level cluster screener;
deriving one or more sentence-level intra-document cluster embeddings from the one or more intra-document strong clusters, by aggregating one or more strong chunk embeddings from each intra-document cluster using one or more pooling algorithm; and
deriving the document-level embedding from the one or more sentence-level intra-document cluster embeddings by applying the one or more pooling algorithms, wherein the document-level embedding represents the contextually relevant part of each text document from the one or more text documents.

4. The method as claimed in claim 3, wherein the sentence-level intra-document cluster screener identifies the one or more strong intra-document clusters by:
identifying a total number of sentence chunks in each intra-document cluster from the one or more intra-document clusters to obtain an intra-document cluster count;
aggregating the intra-document cluster count of each intra-document cluster from the one or more intra-document clusters to obtain a frequency list, wherein the frequency list reflects semantic similarity within each text document of the one or more text documents;
calculating standard deviation of the frequency list; and
identifying one or more intra-document clusters having a frequency higher than the standard deviation of the frequency list, as the one or more strong intra-document clusters.

5. The method as claimed in claim 1, wherein the inter-document clustering of the one or more text documents comprises:
computing an inter-document similarity score for each document-level embeddings from the plurality of document-level embeddings using the one or more similarity algorithms;
clustering the plurality of document-level embeddings into one or more inter-document clusters based on the inter-document similarity score derived for each text document, wherein a second pre-defined threshold of the inter-document similarity score is applied to obtain the one or more inter-document clusters; and
computing the CLIAR index for the one or more inter-document clusters wherein the CLIAR index determines relevancy of the one or more inter-document clusters identified, and wherein the CLIAR index balances (i) an inter-document cluster integrity to ensure a cohesiveness of identified inter-document clusters, and (ii) an inter-document cluster relevancy based on the contextually relevant part of each text document from the one or more text documents.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive (i) one or more text documents, and (ii) one or more embedding models;
obtain a plurality of chunk embeddings with semantic information for each text document from the one or more text documents, wherein size of each text document from the one or more text documents is first validated based on a pre-defined window size and a pre-defined stride size, wherein the pre-defined window size and the pre-defined stride size is specified as per the embedding model chosen, and wherein the plurality of chunk embeddings with semantic information are obtained from the one or more embedding models using a sliding window technique;
perform an intra-document clustering of each text document from the one or more text documents to obtain a document-level embedding, wherein while performing the intra-document clustering, the plurality of chunk embeddings of each text document from the one or more text documents are processed using a sentence-level intra-document cluster screener to obtain the document-level embedding, and wherein each of the document-level embeddings, from a plurality of document-level embeddings of the one or more text documents represents contextually relevant part of each text document from the one or more text documents;
perform an inter-document clustering of the one or more text documents to obtain one or more inter-document clusters by segregating the plurality of document-level embeddings of the one or more text documents into the one or more inter-document clusters based on an inter-document similarity score; computing, via the one or more hardware processors, a cluster integrity and relevancy (CLIAR) index for the one or more inter-document clusters, wherein the CLIAR index is a certainty score to determines relevancy of each of the one or more inter-document clusters; and
retain at least one inter-document cluster from among the one or more inter-document clusters that exceeds a pre-defined threshold of a normalized value of the CLIAR index, wherein the at least one inter-document cluster from among the one or more inter-document clusters comprises one or more contextually relevant text documents with contextually relevant part of each text document from the one or more text documents.

7. The system as claimed in claim 6, wherein the CLIAR index is represented as: $CLIAR INDEX = \left(1-E\right) + \left(LC/N\right) - \left(UC/N\right) ,$ where
*E* is an entropy that measures diversity within the inter-document cluster leveraging probability of each inter-document cluster represented by a cluster ID,
*LC* is a largest inter-document cluster size representing number of text documents in the largest cluster,
*UC* represents number of inter-document clusters formed during an inter-document screening of the one or more text documents, and
*N* is total number of text documents in the one or more inter-document clusters.

8. The system as claimed in claim 6, wherein the intra-document clustering is performed by a process comprising steps:
computing an intra-document similarity score for each chunk embedding of the plurality of chunk embeddings using one or more similarity scoring algorithm;
clustering the plurality of chunk embeddings based on the intra-document similarity score of each chunk embedding, wherein a first pre-defined threshold of the intra-document similarity score is applied to obtain one or more intra-document clusters from the plurality of chunk embeddings, and wherein each intra-document cluster represented by the intra-document cluster ID comprises one or more semantically related chunk embeddings identified with a chunk identification (ID);
computing an intra-document cluster prominence by calculating a number of semantically related chunks in each intra-document cluster from the one or more intra-document clusters to obtain one or more strong intra-document clusters using the sentence-level cluster screener;
deriving one or more sentence-level intra-document cluster embeddings from the one or more intra-document strong clusters, by aggregating one or more strong chunk embeddings from each intra-document cluster using one or more pooling algorithm; and
deriving the document-level embedding from the one or more sentence-level intra-document cluster embeddings by applying the one or more pooling algorithms, wherein the document-level embedding represents the contextually relevant part of each text document from the one or more text documents.

9. The system as claimed in claim 8, wherein the sentence-level intra-document cluster screener identifies the one or more strong intra-document clusters by:
identifying a total number of sentence chunks in each intra-document cluster from the one or more intra-document clusters to obtain an intra-document cluster count;
aggregating the intra-document cluster count of each intra-document cluster from the one or more intra-document clusters to obtain a frequency list, wherein the frequency list reflects semantic similarity within each text document of the one or more text documents;
calculating standard deviation of the frequency list; and
identifying one or more intra-document clusters having a frequency higher than the standard deviation of the frequency list, as the one or more strong intra-document clusters.

10. The system as claimed in claim 6, wherein the inter-document clustering of the one or more text documents comprises:
computing an inter-document similarity score for each document-level embeddings from the plurality of document-level embeddings using the one or more similarity algorithms;
clustering the plurality of document-level embeddings into one or more inter-document clusters based on the inter-document similarity score derived for each text document, wherein a second pre-defined threshold of the inter-document similarity score is applied to obtain the one or more inter-document clusters; and
computing the CLIAR index for the one or more inter-document clusters wherein the CLIAR index determines relevancy of the one or more inter-document clusters identified, and wherein the CLIAR index balances (i) an inter-document cluster integrity to ensure a cohesiveness of identified inter-document clusters, and (ii) an inter-document cluster relevancy based on the contextually relevant part of each text document from the one or more text documents.

11. One or more non-transitory machine-readable information storage mediums comprising one or more instructions which when executed by one or more hardware processors cause:
receiving (i) one or more text documents, and (ii) one or more embedding models;
obtaining a plurality of chunk embeddings with semantic information for each text document from the one or more text documents, wherein size of each text document from the one or more text documents is first validated based on a pre-defined window size and a pre-defined stride size, wherein the pre-defined window size and the pre-defined stride size is specified as per the embedding model chosen, and wherein the plurality of chunk embeddings with semantic information are obtained from the one or more embedding models using a sliding window technique;
performing an intra-document clustering of each text document from the one or more text documents to obtain a document-level embedding, wherein while performing the intra-document clustering, the plurality of chunk embeddings of each text document from the one or more text documents are processed using a sentence-level intra-document cluster screener to obtain the document-level embedding, and wherein each of the document-level embeddings, from a plurality of document-level embeddings of the one or more text documents represents contextually relevant part of each text document from the one or more text documents;
performing an inter-document clustering of the one or more text documents to obtain one or more inter-document clusters by segregating the plurality of document-level embeddings of the one or more text documents into the one or more inter-document clusters based on an inter-document similarity score; computing, via the one or more hardware processors, a cluster integrity and relevancy (CLIAR) index for the one or more inter-document clusters, wherein the CLIAR index is a certainty score to determines relevancy of each of the one or more inter-document clusters; and
retaining at least one inter-document cluster from among the one or more inter-document clusters that exceeds a pre-defined threshold of a normalized value of the CLIAR index, wherein the at least one inter-document cluster from among the one or more inter-document clusters comprises one or more contextually relevant text documents with contextually relevant part of each text document from the one or more text documents.

12. The one or more non-transitory machine readable information storage mediums as claimed in claim 11, wherein the CLIAR index is represented as: $CLIAR INDEX = \left(1-E\right) + \left(LC/N\right) - \left(UC/N\right) ,$ where
*E* is an entropy that measures diversity within the inter-document cluster leveraging probability of each inter-document cluster represented by a cluster ID,
*LC* is a largest inter-document cluster size representing number of text documents in the largest cluster,
*UC* represents number of inter-document clusters formed during an inter-document screening of the one or more text documents, and
*N* is total number of text documents in the one or more inter-document clusters.

13. The one or more non-transitory machine readable information storage mediums as claimed in claim 11, wherein the intra-document clustering is performed by a process comprising steps:
computing an intra-document similarity score for each chunk embedding of the plurality of chunk embeddings using one or more similarity scoring algorithm;
clustering the plurality of chunk embeddings based on the intra-document similarity score of each chunk embedding, wherein a first pre-defined threshold of the intra-document similarity score is applied to obtain one or more intra-document clusters from the plurality of chunk embeddings, and wherein each intra-document cluster represented by the intra-document cluster ID comprises one or more semantically related chunk embeddings identified with a chunk identification (ID);
computing an intra-document cluster prominence by calculating a number of semantically related chunks in each intra-document cluster from the one or more intra-document clusters to obtain one or more strong intra-document clusters using the sentence-level cluster screener;
deriving one or more sentence-level intra-document cluster embeddings from the one or more intra-document strong clusters, by aggregating one or more strong chunk embeddings from each intra-document cluster using one or more pooling algorithm; and
deriving the document-level embedding from the one or more sentence-level intra-document cluster embeddings by applying the one or more pooling algorithms, wherein the document-level embedding represents the contextually relevant part of each text document from the one or more text documents.

14. The one or more non-transitory machine readable information storage mediums as claimed in claim 13, wherein the sentence-level intra-document cluster screener identifies the one or more strong intra-document clusters by:
identifying a total number of sentence chunks in each intra-document cluster from the one or more intra-document clusters to obtain an intra-document cluster count;
aggregating the intra-document cluster count of each intra-document cluster from the one or more intra-document clusters to obtain a frequency list, wherein the frequency list reflects semantic similarity within each text document of the one or more text documents;
calculating standard deviation of the frequency list; and
identifying one or more intra-document clusters having a frequency higher than the standard deviation of the frequency list, as the one or more strong intra-document clusters.

15. The one or more non-transitory machine readable information storage mediums as claimed in claim 11, wherein the inter-document clustering of the one or more text documents comprises:
computing an inter-document similarity score for each document-level embeddings from the plurality of document-level embeddings using the one or more similarity algorithms;
clustering the plurality of document-level embeddings into one or more inter-document clusters based on the inter-document similarity score derived for each text document, wherein a second pre-defined threshold of the inter-document similarity score is applied to obtain the one or more inter-document clusters; and
computing the CLIAR index for the one or more inter-document clusters wherein the CLIAR index determines relevancy of the one or more inter-document clusters identified, and wherein the CLIAR index balances (i) an inter-document cluster integrity to ensure a cohesiveness of identified inter-document clusters, and (ii) an inter-document cluster relevancy based on the contextually relevant part of each text document from the one or more text documents.
